(19) Europäisches Patentamt
European Patent Office
Office européen des brevets

(11) **EP 2 174 109 B1**

(12) **EUROPÄISCHE PATENTSCHRIFT**

(45) Veröffentlichungstag und Bekanntmachung des Hinweises auf die Patenterteilung:
**09.03.2011 Patentblatt 2011/10**

(21) Anmeldenummer: **08785297.6**

(22) Anmeldetag: **01.08.2008**

(51) Int Cl.:
***G01M 3/22*** *(2006.01)*

(86) Internationale Anmeldenummer:
**PCT/EP2008/006356**

(87) Internationale Veröffentlichungsnummer:
**WO 2009/018971 (12.02.2009 Gazette 2009/07)**

(54) **VERFAHREN UND VORRICHTUNG ZUR DETEKTION EINER LECKAGE AN EINEM DOPPELROHR**

METHOD AND DEVICE FOR THE DETECTION OF A LEAKAGE IN A DOUBLE PIPE

PROCÉDÉ ET DISPOSITIF DE DÉTECTION D'UNE FUITE DANS UN TUBE DOUBLE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **03.08.2007 DE 102007036682**

(43) Veröffentlichungstag der Anmeldung:
**14.04.2010 Patentblatt 2010/15**

(73) Patentinhaber: **Areva NP GmbH**
**91052 Erlangen (DE)**

(72) Erfinder: **JAX, Peter**
**91056 Erlangen (DE)**

(74) Vertreter: **Mörtel & Höfner**
**Patentanwälte**
**Äussere Sulzbacher Strasse 159/161**
**90491 Nürnberg (DE)**

(56) Entgegenhaltungen:
**EP-A- 0 692 706    US-A- 3 191 427**
**US-A- 4 663 962**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Detektion einer Leckage an einem Doppelrohr.

Zum Transport von flüssigen oder gasförmigen Produkten, wie z.B. Erdöl oder Erdgas, vorwiegend in der Erdöl- oder Chemieindustrie, werden Rohrleitungen bzw. Pipelines eingesetzt. Da die transportierten Produkte in der Regel umweltschädlich sind, ist es wünschenswert, eine Leckage an einer Rohrleitung so schnell als möglich zu detektieren, d.h. zu erkennen und/oder zu lokalisieren.

Hierzu ist z.B. aus der DE 24 31 907 A1 oder der DE 100 60 976 B4 ein unter dem Markennamen "LEOS" vertriebenes System bzw. Verfahren der Firma Siemens AG bzw. AREVA NP GmbH bekannt. Dieses wurde bei sensiblen, mit anderen Worten z.B. wegen Umweltbedingungen besonders leckagegefährdeten oder besonders umweltgefährdende Stoffe transportierenden Rohrleitungen in den vergangenen Jahrzehnten eingesetzt. Das LEOS- Verfahren ist geeignet, auch kleine, sog. schleichende Leckagen, bei denen ca. 1 Liter pro Stunde Flüssigkeit bzw. 0,1 Kubikmeter pro Stunde Gas austritt, zu erkennen und zu lokalisieren. Das Grundprinzip von LEOS beruht auf einem permeablen Sensorschlauch, in den das aus der Pipeline austretende Leckmedium hinein diffundiert. Nach ausreichender Sammlung der Leckmoleküle werden diese in periodischen Zeitabständen zu einem zentralen Messsystem gepumpt und dort mit geeigneten Gassensoren nachgewiesen. Aus der Zeitdifferenz zwischen Einschalten der Pumpe und dem Erreichen der auf die Leckage zurückzuführenden Gaswolke kann der Ort der Leckage bestimmt werden. Dabei wird das Zusammenwirken der beiden nachfolgend beschriebenen Vorgänge genutzt, nämlich einer laminaren Strömung in dem als Rohr wirkenden Sensorschlauch und eine Diffusion der Leckagemoleküle während des Transports, was zu einem Konzentrationsausgleich in radialer Richtung des Sensorschlauches führt. Die entsprechenden Zusammenhänge sind in der Literatur unter dem Stichwort "Taylor Diffusion in Rohren" bekannt geworden. Die Folge ist eine in axialer Richtung des Sensorschlauches konzentriert bleibende Gaswolke.

Um die Gefahr einer Einwirkung auf die Umwelt weiter zu minimieren, werden zunehmend Pipelines in Form von Doppelrohren ausgeführt. Ein innen liegendes Primärrohr transportiert das Produkt; ein äußeres Rohr übernimmt die Funktion einer zusätzlichen Sicherheitsbarriere zur Umwelt, falls das Innenrohr durch betriebliche Einwirkungen wie Korrosion, Druckwechselbelastung, zu hohe Drückstöße etc. undicht werden sollte.

Solche Doppelrohre werden zum Teil im In- und Ausland beim Transport von Rohöl oder Rohölprodukten wie Benzin oder Diesel bereits vorgeschrieben oder sind als Sondermaßnahmen bei sensiblen Umweltbedingungen gefragt wie z.B. bei Flussunterquerungen bzw. Überlandleitungen im Bereich des Permafrostbodens in Alaska.

Unter der Voraussetzung, dass die konstruktiven Bedingungen eines derartigen Doppelrohres sorgfältig ausgelegt sind, werden so zwar die Gefahren eines potentiellen Umweltschadens grundsätzlich verringert, eine betrieblich bedingte Leckage am Innen- oder Außenrohr jedoch nicht vollkommen ausgeschlossen. Deshalb ist es sinnvoll, auch ein solches Doppelrohr mit einem geeigneten Lecküberwachungssystem auszustatten, um frühzeitig einen einzelnen Schaden am Innen- oder Außenrohr des Doppelrohres zu erkennen und einen Umweltschaden, nämlich das Austreten des Produkts in die Umgebung nach Beschädigung des jeweils anderen Rohres, dadurch vollständig zu verhindern. Nicht verhindert werden kann hierdurch lediglich ein Austreten des Produkts nach einem gleichzeitigen Schaden am Innen- und Außenrohr, der z.B. durch konstruktive Maßnahmen des Doppelrohres bzw. dessen Umgebung ausgeschlossen werden sollte.

Grundsätzlich ist es nun bei einem Doppelrohr möglich, einen oben genannten Sensorschlauch in den Zwischenraum von Innen- und Außenwand zu platzieren und so das o.g. Lecküberwachungssystem LEOS anzuwenden, um damit eine vergleichbar sensible Leckageerkennung und -ortung für diese Randbedingung zu erreichen. Hierdurch ist eine sensible Leckerkennung und -ortung bei kleinen Leckraten des Innenrohrs - im Sinne einer Vorwarnung ohne unmittelbare Bedrohung der Umwelt - möglich. Die Verlegung des Sensorschlauchs in den Zwischenraum des Doppelrohrs ist jedoch mit einem erhöhten Aufwand verbunden.

Eine sensible Leckerkennung und -ortung ist auch durch einen Sensorschlauch außerhalb des Doppelrohrs möglich. Dies bringt jedoch insofern keinen sicherheitstechnischen Gewinn, als die Vorschädigung des Innenrohrs nicht erkannt werden kann.

Aus der DE 195 25 176 A1 ist ein zweistufiges Verfahren bekannt bei dem ständig der Druck im Zwischenraum zwischen Innen- und Außenrohr überwacht wird, um große Schäden sowohl am Innen- als auch am Außenrohr zu melden. Des weiteren werden kleine Schäden am Innenrohr durch Umwälzen des Gases im Zwischenraum und Vorbeileiten des Gases an Sonden detektiert. Der Zwischenraum bildet zusammen mit einer Überwachungsvorrichtung, die insbesondere einen Druckbehälter enthält, ein geschlossenes System. Zur Leckageüberprüfung wird ein Großteil der sich im Zwischenraum befindlichen Gase zum Druckbehälter gepumpt und dort komprimiert. Das vorbeiströmende Gas wird durch Stoffsensoren überwacht. Beide Überwachungsverfahren werden im zeitlichen Multiplex benutzt. Eine Leckortung ist mit dem Verfahren nicht möglich.

Aus der DE 694 09 011 T2 ist es bekannt, den Raum zwischen Innen- und Außenrohr derart zu überwachen, dass sich durch konstruktive Maßnahmen am Rohrsystem in den Zwischenraum vom Innenrohr austretendes oder vom Außenrohr eintretendes Medium an bestimmten Sammelstellen sammelt, an welchen direkt Sensoren zur Detektion der Leckstoffe angeordnet sind. Auch hier erfolgt keine Leckortung im eigentlichen Sinne.

Möglich wären für Doppelrohre auch konventionelle Leckageerkennungsmethoden: Bekannt ist, den Druck des Zwischenraums zwischen Innen- und Außenrohr zu überwachen. Z.B. wird er mit einem inerten Gas wie Stickstoff gefüllt und auf ein vom Atmosphärendruck abweichendes Niveau gebracht. Im Falle einer Leckage sinkt oder steigt das Druckniveau im Zwischenraum und die Leckage ist damit angezeigt. Die Methode kann nur eine größere Leckage des Innenrohrs detektieren, ist also für kleine Leckraten nicht empfindlich genug und kann den Leckageort nicht ermitteln.

Bekannt ist auch eine Überwachung des Drucks des Innenrohrs, also eines absoluten Drucks oder eines Druck-Zeitverlaufs bei vergleichbaren Betriebsbedingungen etc.

Bekannt ist auch ein Mengenvergleichsverfahren für das Produkt, also ein Vergleich der Mengen von transportiertem Produkt an einem Einspeise- und Abnahmepunkt entlang der Leitung.

Die genannten Verfahren haben infolge des großen Volumens des Zwischenraums bei größeren Überwachungslängen der Pipeline den Nachteil, dass auch nur größere Leckagen, also hohe Leckraten mit über 1 Kubikmeter pro Stunde, nachgewiesen werden können. Darüber hinaus sind sie nicht in der Lage, den Ort der Leckage anzuzeigen.

Bei einem Doppelrohr entfällt zudem naturgemäß die Möglichkeit, die Leckage am Innenrohr (bei intaktem Außenrohr) durch visuelle Beobachtung von außen zu lokalisieren, was bei einer einwandigen Pipeline bisher immer möglich war und oft genutzt wurde.

Um eine grobe Lokalisierung des Leckortes vornehmen zu können bzw. eine Erhöhung der Empfindlichkeit zu erreichen, sind Konzepte mit einer Einteilung des Zwischenraums in getrennte Sektionen bekannt. Z.B. wird der Zwischenraum jeweils in abgeschlossene, 1 km lange Abschnitte aufgeteilt. Bei einer Gesamtlänge der Pipeline von 65 km sind also 65 Sektionen erforderlich. Dies erfordert aber die Montage und Verkabelung von vielen Druckaufnehmern entlang der Pipeline.

Aufgabe der vorliegenden Erfindung ist es, ein verbessertes Verfahren und eine Vorrichtung zur Detektion einer Leckage an einem Doppelrohr anzugeben.

Die Erfindung beruht dabei auf folgenden Überlegungen: Die Methode des LEOS-Verfahrens, nämlich eine im Leckagefall mit Leckmolekülen kontaminierte Medien- bzw. Luftsäule über die Länge des zu überwachenden Pipelineabschnitts zu transportieren, soll weitgehend beibehalten bleiben. Auf die Montage eines Sensorschlauches soll aber verzichtet werden. Das Innere des Sensorschlauches, der sogenannte Schnüffelraum, soll dabei durch den Zwischenraum zwischen Innen- und Außenrohr des zu überwachenden Rohres, im folgenden auch als Sensorraum bezeichnet, ersetzt werden. Der Zwischenraum selbst stellt damit einen entarteten LEOS-Schlauch dar. Außerdem sollen die modifizierten Verhältnisse im Zwischenraum gegenüber dem bisherigen LEOS-Schlauch entsprechend berücksichtigt werden.

Die Aufgabe der Erfindung wird hinsichtlich des Verfahrens gelöst durch ein Verfahren zur Detektion einer Leckage an einem Doppelrohr, wobei das Doppelrohr ein Innenrohr und ein dieses mit einem Zwischenraum umfassendes Außenrohr aufweist, mit folgenden Schritten: Der Zwischenraum wird mit einem Medium gefüllt. Ist das Medium z.B. Umgebungsluft, ist diese ohnehin im Zwischenraum vorhanden. Das Medium entspricht den im LEOS-Verfahren benutzten Transportmedien im Inneren des Schlauches. Das im Zwischenraum befindliche Medium wird in Längsrichtung des Doppelrohres bewegt, so dass es zu einem erstem Ende des Doppelrohres hin strömt, wobei vom zweiten Ende des Doppelrohres her Medium nachströmt. Am ersten Ende des Doppelrohres wird ein erster Massenstrom für das aus dem Zwischenraum ausströmende Medium und am zweiten Ende ein zweiter Massenstrom $Ev_i$ für das in den Zwischenraum einströmende Medium erfasst. Am ersten Ende, also der Austrittsstelle des Mediums aus dem Zwischenraum, wird das Medium auf einen für eine Leckage charakteristischen Stoff hin untersucht. Mit anderen Worten wird im Medium nach Leckmolekülen gefahndet. Bei Detektion des Stoffes im Medium sind also Leckmoleküle vorhanden. Diese können nur durch die Innen- oder Außenrohr des Doppelrohres in den Zwischenraum eingedrungen sein. Also wird in diesem Fall eine Leckage erkannt und daher ein Leckagesignal erzeugt. Nach dem LEOS-Prinzip wird der Ort der Leckage anhand der Transportzeit des charakteristischen Stoffes von der Leckage bis zum ersten Ende hin und anhand des Massenstroms des Mediums ermittelt.

Solange die Integrität der beiden Rohrwände, also Innen- und Außenrohr, gewahrt bleibt, bleibt das am ersten Ende ankommende Medium frei vom charakteristischen Stoff. Dies kann also mit z.B. Gassensoren in ankommender Messluft als Medium kontrolliert werden.

Da das Verfahren im wesentlichen dem LEOS-Verfahren entspricht, können sämtliche bekannten Ausgestaltungen dieses Verfahrens auch beim erfindungsgemäßen Verfahren angewendet werden. Lediglich beispielhaft sei genannt:

Die Messung kann kontinuierlich, aber auch gemäß dem bisherigen LEOS-Verfahren diskontinuierlich erfolgen. Ersteres hat den Vorteil einer vereinfachten und schnellen Überwachung; letzteres hat den Vorteil, den Ort der Leckage aus der zeitlichen Lage eines Konzentrationspeaks zu erkennen.

Die Bewegung des Mediums durch den Zwischenraum kann durch Pumpen am zweiten oder Saugen am ersten Ende des Doppelrohres erfolgen. Es werden also an den Enden eines zu überwachenden Pipelineabschnitts Zuleitungen geschaffen, über die ein Messgas oder eine Messflüssigkeit, z.B. gereinigte Umgebungsluft, hineingepumpt oder eingesaugt wird. Im Folgenden wird hierbei von "Messluft" gesprochen.

Beim Transport der Leckmoleküle im Zwischenraum werden die gleichen Grundlagen der Superposition von Strömungsmechanik und Diffusion genutzt, die dazu führt, dass Konzentrationsunterschiede in Umfangsrichtung ausgeglichen werden und in axialer Richtung eine relativ konzentrierte Gaswolke beim Transport erhalten bleibt.

Das Verfahren ist hochempfindlich, da es auf einen Nachweis von Null im Normalfall auf eine nachweisbare Konzentration des charakteristischen Stoffes im Leckagefall angelegt ist.

Das Verfahren eignet sich zur Anwendung z.B. in einem Doppelrohr mit Abstandshalter. Derartige Rohre mit kleineren und größeren Durchmessern werden zum Transport von Produkten der Erdölindustrie eingesetzt. Da der Strömungswiderstand des Sensorraumes - verglichen mit dem des Sensorschlauchs beim LEOS-Verfahren - relativ klein ist, ist das Verfahren zur Überwachung von Pipelines großer Längen prädestiniert.

Das Verfahren eignet sich auch für Doppelrohre, z.B. Überlandleitungen mit innenliegender Isolierung. Hierbei können Pipelineabschnitte von 100km und eventuell mehr Länge überwacht werden.

Durch den kompletten Verzicht auf den Sensorschlauch wird der Aufwand des Messsystems deutlich reduziert, nämlich nur noch auf die Messeinrichtungen bzw. Zu- und Ableitungen des Mediums am Anfang und Ende des Pipelineabschnitts.

Im Einzelnen ist ein gegenüber dem bisherigen Sensorschlauchverfahren komplexes Verhalten der Transporteigenschaften des Sensorraums zu berücksichtigen. Grundsätzlich können nämlich nun die nachzuweisenden Stoffe über das Innen- oder Außenrohr in den Zwischenraum gelangen, beim LEOS-Sensorschlauch konnte in diesen nur ein Stoff von außen eindringen.

Im Falle einer kleinen Leckage am Innen- oder Außenrohr werden außerdem die Transporteigenschaften des Sensorraums, genauer gesagt die Transportgeschwindigkeit in Strömungsrichtung gesehen hinter der Leckstelle, verändert. Der Grund hierfür ist, dass Messluft entweder nach außen weg strömt, z.B. im Falle eines Lecks am Außenrohr, wenn die Messluft durch Einpumpen in den Zwischenraum unter Überdruck steht; oder zusätzliche Luft bzw. Dämpfe strömen in den Zwischenraum ein, wenn z.B. ein Überdruck im Innenrohr höher als der des Zwischenraums ist.

Beim erfindungsgemäßen Verfahren wird der Massenstrom $Av_i$ des Mediums am ersten Ende des Doppelrohres bestimmt, und zwar - ähnlich bei einer Abtastung - in gewissen Zeitabständen $\Delta t_i$. Der summierte bzw. integrierte Transportweg S für das Medium ergibt sich daher zu $S = \Sigma \Delta t_i Av_i$.

Die Transporteigenschaften des "Zwischenraums" können bei intaktem Zustand mit Hilfe eines vom LEOS-Verfahren bekannten Testpeaks kalibriert werden, indem für kurze Zeit eine Konzentrationswolke beim Transport der Messluft an der Einlassstelle, also am zweiten Ende des Doppelrohres injiziert wird. Gleichzeitig kann die zugehörige Messkurve aller ermittelten Massenströme $Av_i$ als Funktion der Zeitschritte i, die Transportzeit T bis zum Erreichen der Gassensoren am ersten Ende sowie als Kontrollparameter der Druck am ersten Ende $p_i$ als Funktion des Zeitschritts i gemessen werden. Die Genauigkeit der Beziehung $S = \Sigma \Delta t_i \cdot Av_i$ summiert bis zum Ablauf der Zeit T kann damit, vergleichbar mit dem LEOS- Verfahren, kontrolliert werden bzw. zur Fein-Kalibrierung der Massenstromgeber genutzt werden.

Durch die Erfassung der Massenströme am ersten und zweiten Ende des Doppelrohrs lassen sich die Massenstromverhältnisse im Zwischenraum noch genauer bestimmen. Im Falle einer Leckage kann anhand von erstem und zweitem Massenstrom eine Verlustrate von durch die Leckage strömender Materie ermittelt werden. Die Verlustrate über das Leck kann also durch gleichzeitige Messung des Massenstroms $Ev_i$ an der Einlassstelle und des Massenstroms $Av_i$ an der Auslassstelle als Funktion des Zeitschritts i erfasst werden. Sie entspricht bei kontinuierlicher Strömungsbedingung exakt der Differenz $dv_i = Ev_i - Av_i$ und kann bei instationären Strömungsbedingungen, z.B. zu Beginn des Pumpvorgangs aus Modellrechnungen noch genauer erfasst werden. Beispielsweise gilt zu Beginn des Pumpvorgangs, dass sich das Druckprofil längs der Rohrleitung verändert. In dieser Übergangsphase ist auch bei leckfreien Rohren der Massenstrom $Av_i$ am ersten von dem, $Ev_i$, am zweiten Ende verschieden. Erst wenn sich ein konstantes Druckprofil über der Leitung eingestellt hat, gilt wieder $Ev_i = Av_i$.

Das Medium kann auf zwei verschiedene, jeweils mit einer Leckage am Innenrohr und am Außenrohr assoziierte, Stoffe hin untersucht werden. Ist die Stoffart durch Wahl geeigneter Gassensoren getrennt messbar, ist damit auch erkennbar, ob es sich um eine Leckage am Innen- oder Außenrohr handelt. Bei einem in Europa verlegten Doppelrohr für Rohölprodukte kann z.B. aus dem erhöhten Feuchtigkeitspegel bzw. Rohöldämpfen auf eine Leckage am Außenrohr bzw. am Innenrohr geschlossen, wenn die Messluft aus getrockneter Umgebungsluft mit einem Taupunkt unter -30°C besteht.

Alternativ oder zusätzlich zur Erkennung eines Lecks anhand der Leckmoleküle bzw. des charakteristischen Stoffes kann die Information aus der Differenz des Massenstroms am Einlass und der am Auslass auch zur Leckageerkennung genutzt werden. Hierdurch steht also eine unabhängige zweite Möglichkeit zur Leckageerkennung, z.B. als Backupsystem bei Ausfall eines Leckmolekülsensors, zur Verfügung. Dies gilt aber nur bei hinreichend großer Lecköffnung im Verhältnis zur Querschnittsfläche des Sensorraums.

Im Falle einer Leckage kann anhand von erstem und zweitem Massenstrom, d.h. aus dem Vorzeichen der Differenz $dv_i$ detektiert werden, ob sich die Leckage am Innenrohr oder am Außenrohr befindet.

Unter Nutzung der zeitlichen Änderung der

Massenströme $Av_i$ und $Ev_i$ kann die Wanderung eines Testpeaks von der Einlassstelle, also dem zweiten Ende, zum Auslass, also dem ersten Ende, berechnet werden als zwei Teilsummen über die Zeitschritte i, die auf die Bewegung hinter der Leckstelle bis zum Auslass (Zeitbereich 0 - Tx) und vom Einlass bis zur Leckstelle (Zeitbereich Tx - T) zurückgehen. Es gilt dabei die Gleichung

$$\sum_{0}^{Tx} Av_i \Delta t_i + \sum_{Tx}^{T} Ev_i \Delta t_i = S$$, bzw. gilt für den Leckort $L = \sum_{0}^{Tx} Av_i t_i$ .

Es muss berücksichtigt werden, dass die Form des Konzentrationsprofils über der Zeit bei dieser Lekkageeinrichtung sich anders darstellt als beim LEOS-Verfahren, da der an der Leckstelle eindringende Gasstrom dieses Profil verändert. Es ist anzunehmen, dass bei Transport ohne Adsorption und vernachlässigbarer Rückdiffusion im Falle kleiner Leckagen die Form dem bekannten Gauß-Profil ähnelt; bei großer Leckage das Profil aber mehr und mehr rampenartig wird. Im ersteren Fall ist die Ein- oder Ausströmung in den Zwischenraum über die Lecköffnung während des Transports vernachlässigbar, im letzteren Falle dringt auch während des Transports kontinuierlich Leckmedium nach. Nur bei einer extrem großen Leckage kann es ratsam sein, gegebenenfalls die Strömungsrichtung im Rahmen einer Sondermessung umzukehren, um den Zeitpunkt des Einsatzes der Rampe bestimmen zu können. Dies gilt jedoch nur, wenn der über die Lecköffnung eindringende Massenstrom mit der Querschnittsfläche des Sensorraums vergleichbar wird.

Nach der Detektion einer Leckage kann das Medium daher auch vom ersten zum zweiten Ende hin bewegt werden, am zweiten Ende kann dann das Medium auf einen für eine Leckage charakteristischen Stoff hin untersucht werden, ein Ort der Leckage kann dann anhand der Transportzeit des charakteristischen Stoffes von der Leckage bis zum zweiten Ende hin und anhand des Massenstroms des Mediums ermittelt werden. Diese Umschaltung der Transportrichtung des Mediums kann auch mehrmals hin und her erfolgen, um die Ortungsgenauigkeit des Lecks zu erhöhen.

Hinsichtlich der Vorrichtung wird die Aufgabe der Erfindung gelöst durch eine Vorrichtung zur Detektion einer Leckage an einem Doppelrohr, wobei das Doppelrohr ein Innenrohr und ein dieses mit einem Zwischenraum umfassendes Außenrohr aufweist. Die Vorrichtung umfasst eine Fördereinrichtung zur Bewegung eines Mediums durch den Zwischenraum von einem zweiten Ende des Doppelrohres zu einem ersten Ende hin, einen am ersten Ende angeordneten Stoffsensor zur Untersuchung des Mediums auf einen für eine Leckage charakteristischen Stoff hin, einen Massenstromsensor am ersten Ende für das durch den Zwischenraum strömende Medium, und eine Steuer- und Auswerteeinheit zur Erkennung einer Leckage bei Detektion des Stoffs und zu einer Ermittlung des Ortes der Leckage anhand der Transportzeit des charakteristischen Stoffes von der Leckage bis zum Sensor und anhand des Massenstromsensors.

Mit einer derartige Vorrichtung ist das erfindungsgemäße Verfahren in seiner Grundform durchführbar. Der Ort der Leckstelle kann aus der Zeitdifferenz zwischen dem Einschalten der Fördereinrichtung, z.B. einer Pumpe, und dem Erkennen eines Konzentrationspeaks über der Zeit abgeleitet werden, wobei die o.g. einfache Formel für den Leckort genutzt werden kann.

Um das Doppelrohr bzw. einen Rohrabschnitt überwachen zu können kann die Vorrichtung eine jeweilige Abdichtung für den Zwischenraum mit einem Auslass am ersten und einem Einlass am zweiten Ende des Doppelrohres bzw. Rohrabschnitts umfassen, wobei Stoffsensor und Massenstromsensor dem Auslass nachgeschaltet sind.

So kann also für einen zu überwachenden Rohrabschnitt am ersten und zweiten Ende dessen der Zwischenraum mit einer Abdichtung versehen werden, am ersten Ende ein Auslass und ein Stoffsensor für den charakteristischen Stoff und am zweiten Ende ein Einlass, jeweils für das Medium, an der Abdichtung angebracht werden.

Der Einlass und der Auslass können jeweils einen Querschnitt aufweisen, der zumindest annähernd dem freien Querschnitt, also in etwa der Fläche des freien Zwischenraums von Innen- und Außenrohr in Erstreckungsrichtung des Doppelrohres entspricht. Eventuelle Einbauten im Zwischenraum, Isolierungsmasse etc. müssen mitberücksichtigt werden.

An der Einlassstelle stellt man bevorzugt eine Druckpumpe sowie eine Einrichtung zur Erfassung des Massenstroms für einströmendes Medium auf und bewegt damit die Messluft in den Zwischenraum in periodischen Zeitabständen. Alternativ kann auf die Druckpumpe verzichtet werden und es ist eine Saugpumpe an der Auslassstelle einzurichten. Dort befindet sich dann das eigentliche Messsystem mit Gassensoren zur Erfassung der Konzentration des charakteristischen Stoffes als Funktion der Zeit und einem Massenstromgeber.

Die Genauigkeit der Ortung kann durch Kalibrierung mit Hilfe eines Testpeaks, wie von LEOS bekannt, und Nutzung des am Einlass gemessenen Massenstroms verbessert werden.

Zur Kontrolle bzw. genaueren Berechnung der Strömungsprofile im Zwischenraum kann noch ein Drucksensor an der Auslassstelle und/oder der Einlassstelle montiert sein, der den jeweiligen Druck $p_i$ im Zwischenraum erfasst. Er ist aber nicht zwingend für das Messverfahren von Bedeutung.

Die Vorrichtung kann einen diversitären Stoffsensor für jeweils mit einer Leckage am Innenrohr und am Außenrohr korrelierten charakteristischen Stoffe enthalten. Hierdurch kann eine Leckage am Innen- und Außenrohr unterschieden werden.

Ein weiterer Stoffsensor kann am Einlass angeordnet sein. Hierdurch ist das o.g. Umkehrverfahren durchführbar, bei dem die Transportrichtung des Mediums umgekehrt wird.

Für eine weitere Beschreibung der Erfindung wird auf die Ausführungsbeispiele der Zeichnungen verwiesen. Es zeigen, jeweils in einer schematischen Prinzipskizze:

Fig. 1     eine doppelwandige Pipeline mit Leckageüberwachungs- und ortungssystem gemäß der Erfindung,

Fig. 2     die Pipeline aus Fig. 1 im Detail,

Fig. 3     gemessene Konzentrationsprofile von Lekkagestoffen für eine kleine Lecköffnung (a), eine große Lecköffnung (b) und eine große Lecköffnung und umgekehrte Pumprichtung (c),

Fig. 4     Druckprofile entlang der Pipeline zu verschiedenen Zeitpunkten.

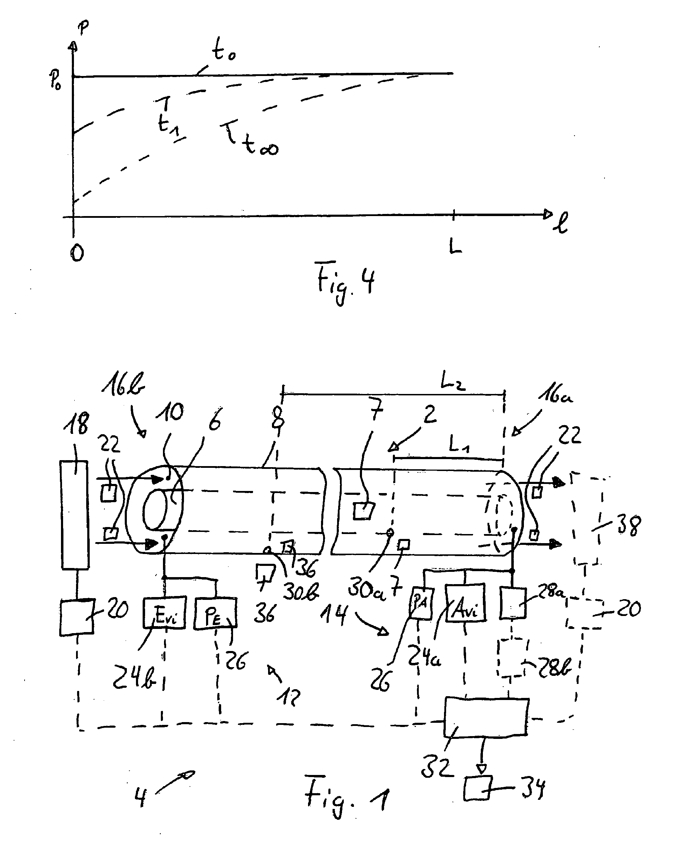

Fig. 1 zeigt eine Pipeline 2 mit einem daran angeordneten System 4 zur Leckageerkennung- und ortung. Die Pipeline 2 ist doppelwandig aufgebaut, d.h. umfasst ein Innenrohr 6 zum Transport eines Produkts 7, wie z.B. Erdöl, und ein dieses konzentrisch umschließendes Außenrohr 8. Das Außenrohr 8 umgibt das Innenrohr 6 mit einem Radialspalt oder Zwischenraum 10.

Das System 4 umfasst einen Einspeiseteil 12 und einen Auswerteteil 14. Der Auswerteteil 14 ist an einem ersten Ende 16a der Pipeline 2, der Einspeiseteil 12 an dem in Erstreckungsrichtung anderen Ende bzw. zweiten Ende 16b angeordnet.

Der Einspeiseteil 12 umfasst eine Druckpumpe 18, welche durch ein System 20 zur Zeitsynchronisierung gesteuert wird. Durch die Druckpumpe 18 wird Messluft 22 in axialer Richtung der Pipeline 2 in den Zwischenraum 10 gedrückt, wenn die Druckpumpe 18 aktiv ist. Der Einspeiseteil 12 umfasst weiterhin einen am Ende 16b angeordneten Massenstromsensor 24b zur Ermittlung des Massenstroms $Ev_i$ der einströmenden Messluft 22 sowie einen Drucksensor 26 zur Ermittlung des Drucks $p_E$ am Ende 16b im Zwischenraum 10.

Der Auswerteteil 14 enthält einen Massenstromsensor 24a zur Bestimmung des Massenstroms $Av_i$ der am Ende 16a austretenden Messluft 22. Weiterhin enthält er einen Gassensor 28a, welcher auf das im Innenrohr 6 transportierte Produkt 7 anspricht.

Solange das Innenrohr 6 fehlerfrei ist, gelangt kein Produkt 7 in den Zwischenraum 10 und der Gassensor 28a spricht beim Durchpumpen der Messluft 22 durch die Druckpumpe 18 nicht an. Im Falle eines Lecks 30a am Innrohr 6 jedoch tritt Produkt 7 in den Zwischenraum 10 ein und passiert nach einem Laufweg $L_1$ den Gassensor 28a, welcher das Produkt 7 detektiert und über einen ebenfalls zum System 4 gehörenden Steuerrechner 32 ein Leckagesignal 34 erzeugt. Der Steuerrechner 32 dient im übrigen zur Steuerung sämtlicher Komponenten des Systems 4 und ist mit diesen vernetzt.

In einer alternativen Ausführungsform ist ein zweiter Gassensor 28b am Ende 16a des Zwischenraums 10 angeordnet, welcher auf Umgebungsluft 36 reagiert. Solange das Außenrohr 8 fehlerfrei ist, gelangt die Umgebungsluft 36 nicht in den Zwischenraum 10, weshalb der Sensor 28b nicht auslöst. Im Falle eines Lecks 30b dringt jedoch Umgebungsluft 36 auch in den Zwischenraum 10 ein, weshalb sie wiederum nach einem zweiten Laufweg $L_2$ den Gassensor 28b passiert und dieser ebenfalls über den Steuerrechner 32 ein Leckagesignal 34, diesmal als Leckagesignal für das Außenrohr 8 ausgibt.

Für eine genauere Erklärung des Systems 4 bezüglich zyklischen Abpumpens des Zwischenraums 10, Leckageerkennung usw. wird auf die einschlägige Literatur zum System LEOS verwiesen.

In einer alternativen Ausführungsform ist die Druckpumpe 18 durch eine Saugpumpe 38 am Ende 16a der Pipeline 2 ersetzt. Die Messluft 22 wird dann durch den Zwischenraum 10 nicht gedrückt, sondern gesaugt.

Alternativ oder zusätzlich ist auch am Ende 16a ein Drucksensor 26 angebracht, welcher den Druck $p_A$ im Zwischenraum 10 am Ende 16a ermittelt.

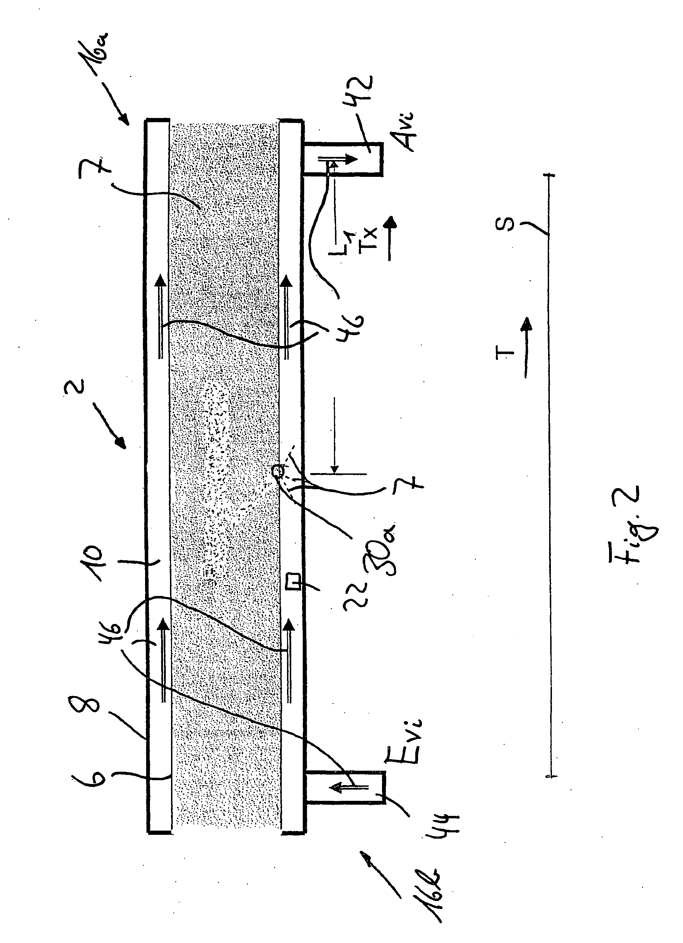

Fig. 2 zeigt nochmals die Pipeline 2 im Detail, insbesondere, dass diese an den Enden 16a,b eine den Zwischenraum 10 in axialer Richtung verschließende Abdichtung 40 aufweist. Der Zwischenraum 10 ist damit hermetisch durch die Abdichtungen 40, das Innenrohr 6 und das Außenrohr 8 verschlossen. Daher ist am Ende 16a ein Auslass 42 und am Ende 16b ein Einlass 44 in das Außenrohr 8 eingebracht, welcher den Zwischenraum 10 wieder zugänglich macht. So kann, entsprechend Fig. 1, entlang der Pfeile 46 Messluft 22 durch den Zwischenraum 10 gepumpt oder gesaugt werden.

In Fig. 2 ist außerdem die Länge des Transportweges S für die Messluft 22 vom Einlass 44 zum Auslass 42 gezeigt, welche bei Betrieb der Druckpumpe 18 hierfür eine Laufzeit T benötigt. Außerdem ist gezeigt, dass durch das Leck 30a austretendes Produkt 7 ab der Stelle des Lecks 30a von der Messluft 22 in Richtung der Pfeile 46 bis zum Auslass 42 mitgenommen wird, hierbei den Laufweg L1 absolviert und hierzu die Transportzeit Tx benötigt.

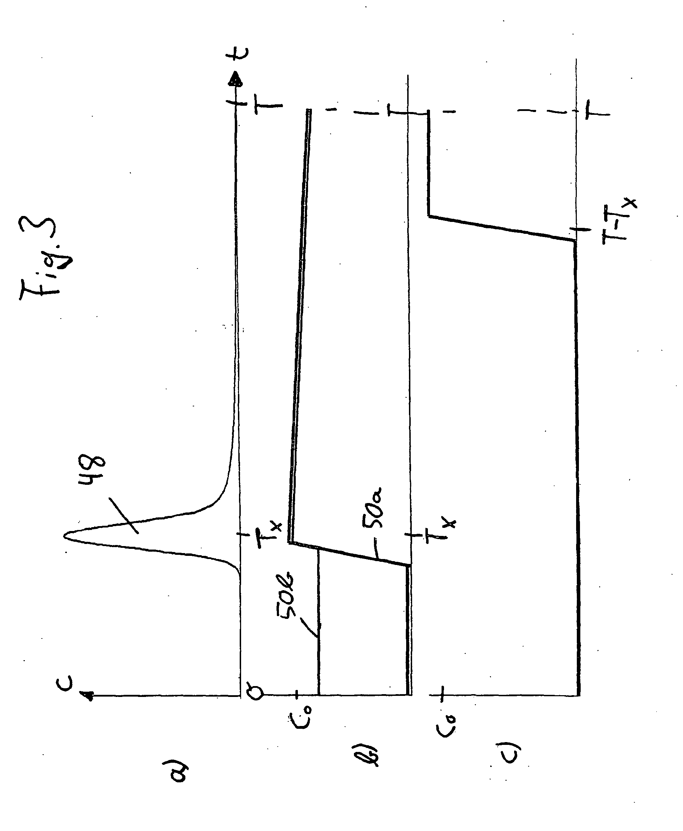

Fig. 3a zeigt einen bei einem kleinen Leck 30a am Gassensor 28a ermittelten Zeitverlauf der Konzentration c des Produkts 7 über der Zeit t. Zum Zeitpunkt t=0 wird die Pumpe 18 in Betrieb gesetzt. Die Messluft 22 wird durch den Zwischenraum 10 geschoben. Da der Bereich zwischen dem Ende 16a und dem Leck 30a nicht mit Produkt 7 verunreinigt ist, wird zunächst eine Konzentration c=0 gemessen. Zum Zeitpunkt Tx erreicht das von der Messluft 22 transportierte Produkt 7 den Sensor 28a, weshalb die Konzentration c in Form eines Peaks 48 ansteigt und anschließend wieder abfällt, da der restliche Sensorraum bzw. Zwischenraum 10 zwischen dem Leck 30a und dem Ende 16b der Pipeline 2 ebenfalls nicht von Produkt 7 erfüllt war. Zum Zeitpunkt T ist die gesamte Messluft 22 des Zwischenraums 10 ausgetauscht und die Pumpe 18 wird wieder abgeschaltet. Aus der Transportzeit Tx bzw. dem Auftreten des Peaks 48 wird der Leckageort des Lecks 30a als Länge bzw. Laufweg $L_1$ ermittelt.

Fig. 3b zeigt einen entsprechenden Konzentrationsverlauf der Konzentration c von Produkt 7 in einer ersten Messkurve 50a für ein sehr großes Leck 30a. Beim ersten Abpumpen der Messluft 22 nach Auftreten des Lecks 30a ergibt sich die Messkurve 50a, welche entsprechend zu Peak 48 erst zum Zeitpunkt Tx von 0 auf eine hohe Konzentration C0 ansteigt. Da beim weiteren Abpumpen der Messluft 22 wegen der großen Menge ausströmenden Produkts 7 auch die nachfolgende Messluft 22 weiterhin mit Produkt 7 versetzt ist, fällt die Konzentration c nach der Transportzeit Tx kaum ab.

In einem zweiten Messzyklus wird deshalb die Messkurve 50b ermittelt, welche bereits bei einer von Null verschiedenen Konzentration beginnt, da inzwischen der gesamte Zwischenraum 10 zwischen dem Leck 30a und dem Ende 16a mit Produkt 7 kontaminiert ist. Der Anstieg 52 der Konzentration c zur Transportzeit Tx ist nicht mehr ausreichend gut feststellbar.

In diesem Fall wird daher die Pumprichtung der Messluft 22 umgekehrt, d.h. in Fig. 2 die Messluft 22 entgegen der Richtung der Pfeile 46 transportiert. Da der Abschnitt der Pipeline 2 zwischen dem Leck 30a und dem Ende 16b jedoch noch nicht mit Produkt 7 kontaminiert ist, da in diesem Bereich bisher, also in den vorhergehenden Pumpvorgängen, stets frische Messluft 22 vom Einlass 44 nachströmte, ergibt sich in umgekehrter Pumprichtung zunächst wieder eine Konzentration c von Null und erst zum Zeitpunkt T-Tx wegen der umgekehrten Pumprichtung ein wiederum deutlicher Anstieg der Konzentration c auf den Wert Co.

Fig. 4 zeigt die Druckverhältnisse im Zwischenraum 10 zu einem Zeitpunkt $t_0$ wenn kein Pumpvorgang stattfindet. Zum Zeitpunkt $t_0$ herrscht im Zwischenraum 10 auf der gesamten Länge vom Ende 16a (Länge 0) bis zum Ende 16b (Länge L) der gleiche Druck $p_0$. Beginnt man nun, am Ende 16a, also bei der Länge L=0 Messluft 22 abzusaugen, fällt dort lokal der Druck p ab. Zu einem Zeitpunkt $t_1$ ändert sich daher stets ein Druckgefälle, welches am Ende 16a am niedrigsten ist und am Ende 16b noch den ursprünglichen Wert $p_0$ aufweist. Die Messströme $Ev_i$ und $Av_i$ sind nun unterschiedlich.

Wird die Pumprate konstant gehalten, so stellen sich nach einer gewissen Zeit, theoretisch nach unendlich langer Zeit $t_\infty$, konstante Druckverhältnisse entlang der Pipeline 2 ein, welche als Linie zum Zeitpunkt $t_\infty$ in Fig. 4 dargestellt sind. Zum Zeitpunkt $t_\infty$ ist dann auch der am Einlass 44 in Fig. 2 einströmende Massenstrom $Ev_i$ wieder gleich dem am Auslass 42 ausströmenden Massenstrom $Av_i$.

**Patentansprüche**

**1.** Verfahren zur Detektion einer Leckage (30a,b) an einem Doppelrohr (2), wobei das Doppelrohr (2) ein Innenrohr (6) und ein dieses mit einem Zwischenraum (10) umfassendes Außenrohr (8) aufweist, mit folgenden Schritten:

- der Zwischenraum (10) wird mit einem Medium (22) gefüllt,
- das im Zwischenraum (10) befindliche Medium (22) wird in Längsrichtung des Doppelrohres (2) zu einem erstem Ende (16a) dessen hin bewegt, wobei vom zweiten Ende (16b) Medium (22) nachströmt,
- am ersten (16a) und zweiten Ende (16b) wird jeweils ein erster ($Av_i$) und zweiter Massenstrom ($Ev_i$) für das aus dem Zwischenraum (10) aus- und in diesen einströmende Medium (22) erfasst,
- am ersten Ende (16a) wird das Medium (22) auf einen für eine Leckage (30a,b) charakteristischen Stoff (7,36) hin untersucht,
- bei Detektion (34) des Stoffes (7,36) im Medium (22) wird ein Leckagesignal (34) erzeugt,
- die Transportzeit (Tx) des charakteristischen Stoffes (7,36) von der Leckage (30a,b) bis zum ersten Ende (16a) hin wird als Zeitdifferenz zwischen dem Einschalten einer Fördereinrichtung (18,36) und der Detektion (34) des Stoffs (7,36) ermittelt,
- ein Ort ($L_{1,2}$) der Leckage (30a,b) wird anhand der Transportzeit (Tx) und anhand des ersten ($Av_i$) und zweiten Massenstroms ($Ev_i$) des Mediums (22) ermittelt,
- wobei im Falle einer Leckage (30a,b) anhand von erstem ($Av_i$) und zweitem Massenstrom ($Ev_i$) eine Verlustrate ($dv_i$) von durch die Leckage (30a,b) strömender Materie (7,36) ermittelt wird.

**2.** Verfahren nach Anspruch 1, bei dem das Medium (22) auf zwei verschiedene, jeweils mit einer Leckage (30a,b) am Innenrohr (6) und am Außenrohr (8) assoziierte, Stoffe (7,36) hin untersucht wird.

**3.** Verfahren nach einem der vorhergehenden Ansprüche, bei dem im Falle einer Leckage (30a, b) anhand von erstem ($Av_i$) und zweitem Massenstrom ($Ev_i$) detektiert wird, ob sich die Leckage (30a,b) am Innenrohr (6) oder am Außenrohr (8) befindet.

**4.** Verfahren nach einem der vorhergehenden Ansprüche, bei dem:

- nach der Detektion einer Leckage (30a,b) das Medium (22) vom ersten (16a) zum zweiten Ende (16b) hin bewegt wird,
- am zweiten Ende (16b) das Medium (22) auf einen für eine Leckage (30a,b) charakteristischen Stoff (7,36) hin untersucht wird,
- ein Ort ($L_{1,2}$) der Leckage (30a,b) anhand der Transportzeit (Tx) des charakteristischen Stoffes (7,36) von der Leckage (30a,b) bis zum zweiten Ende (16b) hin und anhand des Massenstroms (Ev$_i$, Av$_i$) des Mediums (22) ermittelt wird.

5. Vorrichtung (4) zur Detektion einer Leckage (30a,b) an einem Doppelrohr (2), wobei das Doppelrohr (2) ein Innenrohr (6) und ein dieses mit einem Zwischenraum (10) umfassendes Außenrohr (8) aufweist, mit:

   - einer Fördereinrichtung (18, 36) zur Bewegung eines Mediums (22) durch den Zwischenraum (10) von einem zweiten Ende (16b) des Doppelrohres zu einem ersten Ende (16a) hin,
   - einem am ersten Ende (16a) angeordneten Stoffsensor (28a,b) zur Untersuchung des Mediums (22) auf einen für eine Leckage (30a,b) charakteristischen Stoff (7,36) hin,
   - einem Massenstromsensor (24a,b) am ersten (16a) und zweiten Ende (16b) für das durch den Zwischenraum (10) strömende Medium (22),
   - einer Steuer- und Auswerteeinheit (32) zur Erzeugung eines Leckagesignals (34) bei Detektion des Stoffs (7,36) und einer Ermittlung des Ortes (L$_{1,2}$) der Leckage (30a,b) anhand der Transportzeit (Tx) des charakteristischen Stoffes (7,36) von der Lekkage (30a,b) bis zum Sensor (28a,b) und anhand der Massenstromsensoren (24a,b).

6. Vorrichtung (4) nach Anspruch 5, mit einer jeweiligen Abdichtung (40) für den Zwischenraum (10) mit einem Auslass (42) am ersten Ende (16a) und einem Einlass (44) am zweiten Ende (16b) des Doppelrohres (2), wobei Stoffsensor (28a,b) und Massenstromsensor (24a,b) dem Auslass (42) nachgeschaltet sind.

7. Vorrichtung (4) nach Anspruch 5 oder 6, bei der Einlass (44) und Auslass (42) einen Querschnitt aufweisen, der zumindest annähernd dem freien Querschnitt des Zwischenraums (10) in Erstreckungsrichtung des Doppelrohres (2) entspricht.

8. Vorrichtung (4) nach einem der Ansprüche 5 bis 7, mit einem diversitären Stoffsensor (28a,b) für jeweils mit einer Leckage (30a,b) am Innenrohr (6) und am Außenrohr (8) korrelierte charakteristische Stoffe (7,36).

9. Vorrichtung (4) nach einem der Ansprüche 5 bis 8, mit einem weiteren Stoffsensor (28b) am Einlass (44).

## Claims

1. Method for detecting a leakage (30a, b) of a double pipe (2), with the double pipe (2) having an internal pipe (6) and an external pipe (8) which surrounds the former with a gap (10), comprising the following steps:

   - the gap (10) is filled with a medium (22),
   - the medium (22) in the gap (10) is moved in the longitudinal direction of the double pipe (2) to a first end (16a) thereof, with medium (22) subsequently flowing in from the second end (16b),
   - at the first end (16a) and the second end (16b), in each case a first mass flow (Av$_i$) and second mass flow (Ev$_i$) for the medium (22) flowing into and out of the gap (10) is acquired,
   - at the first end (16a), the medium (22) is investigated for a substance (7, 36) which is characteristic of a leakage (30a, b),
   - if the substance (7, 36) is detected (34) in the medium (22), a leakage signal (34) is produced,
   - the transport time (Tx) of the characteristic substance (7, 36) from the leakage (30a, b) to the first end (16a) is ascertained as a time difference between switching on a conveying device (18, 36) and detection (34) of the substance (7, 36),
   - a point (L$_{1,2}$) of the leakage (30a, b) is ascertained on the basis of the transport time (Tx) and on the basis of the first mass flow (Av$_i$) and second mass flow (Ev$_i$) of the medium (22),
   - wherein in the case of a leakage (30a, b), a loss rate (dv$_i$) of material (7, 36) which flows through the leakage (30a, b) is ascertained on the basis of the first mass flow (Av$_i$) and the second mass flow (Ev$_i$).

2. Method according to Claim 1, in which the medium (22) is investigated for two different substances (7, 36) which are associated in each case with one leakage (30a, b) at the internal pipe (6) and at the external pipe (8).

3. Method according to one of the preceding claims, in which in the case of a leakage (30a, b) it is detected on the basis of the first mass flow (Av$_i$) and the second mass flow (Ev$_i$) whether the leakage (30a, b) is at the internal pipe (6) or at the external pipe (8).

4. Method according to one of the preceding claims, in which:

   - after a leakage (30a, b) is detected, the medium (22) is moved from the first (16a) to the second end (16b),
   - at the second end (16b), the medium (22) is investigated for a substance (7, 36) which is characteristic of a leakage (30a, b),
   - a point (L$_{1,2}$) of leakage (30a, b) is ascertained using the transport time (Tx) of the characteristic substance (7, 36) from the leakage (30a, b) up to the second end (16b) and using the mass flow (Ev$_i$, Av$_i$) of the medium (22).

5. Apparatus (4) for detecting a leakage (30a, b) at a double pipe (2), with the double pipe (2) having an internal pipe (6) and an external pipe (8) which surrounds the former with a gap (10), comprising:

   - a conveying device (18, 36) for moving a medium (22) through the gap (10) from a second end (16b) of the double pipe toward a first end (16a),
   - a substance sensor (28a, b), arranged at the first end (16a), for investigating the medium (22) for a substance (7, 36) which is characteristic of a leakage (30a, b),
   - a mass flow sensor (24a, b) at the first end (16a) and second end (16b) for the medium (22) which flows through the gap (10),
   - a control and evaluation unit (32) for producing a leakage signal (34) when the substance (7, 36) is detected and for ascertaining the point (L$_{1,2}$) of the leakage (30a, b) using the transport time (Tx) of the characteristic substance (7, 36) from the leakage (30a, b) to the sensor (28a, b) and using the mass flow sensors (24a, b).

6. Apparatus (4) according to Claim 5, having a respective seal (40) for the gap (10) with an outlet (42) at the first end (16a) and an inlet (44) at the second end (16b) of the double pipe (2), with substance sensor (28a, b) and mass flow sensor (24a, b) being connected downstream of the outlet (42).

7. Apparatus (4) according to Claim 5 or 6, in which the inlet (44) and the outlet (42) have a cross section which corresponds, at least approximately, to the free cross section of the gap (10) in the direction of extent of the double pipe (2).

8. Apparatus (4) according to one of Claims 5 to 7, having a diverse substance sensor (28a, b) for characteristic substances (7, 36) which correlate in each case with a leakage (30a, b) at the internal pipe (6) and at the external pipe (8).

9. Apparatus (4) according to one of Claims 5 to 8, having a further substance sensor (28b) at the inlet (44).

**Revendications**

1. Procédé pour détecter une fuite (30a, b) dans une conduite double (2), la conduite double (2) présentant une conduite interne (6) et une conduite externe (8) entourant la première avec un espace intermédiaire (10), comprenant les étapes suivantes :

   - l'espace intermédiaire (10) est rempli avec un fluide (22),
   - le fluide (22) se trouvant dans l'espace intermédiaire (10) est déplacé dans le sens longitudinal de la conduite double (2) en direction de sa première extrémité (16a), le fluide (22) s'écoulant à partir de la seconde extrémité (16b),
   - sur la première extrémité (16a) et la seconde extrémité (16b), on détecte à chaque fois un premier débit massique (Av$_i$) et un second débit massique (Ev$_i$) pour le fluide (22) sortant de l'espace intermédiaire (10) et entrant dans celui-ci,
   - sur la première extrémité (16a), le fluide (22) est analysé au niveau d'un produit (7, 36) caractéristique d'une fuite (30a, b),
   - en cas de détection (34) du produit (7, 36) dans le fluide (22), on génère un signal de fuite (34),
   - le temps de transport (Tx) du produit (7, 36) caractéristique depuis la fuite (30a, b) vers la première extrémité (16a) est déterminé comme différence de temps entre l'enclenchement d'un dispositif de transport (18, 36) et la détection (34) du produit (7, 36),
   - un emplacement (L$_{1,2}$) de la fuite (30a, b) est déterminé à l'aide du temps de transport (Tx) et à l'aide du premier débit massique (Av$_i$) et du second débit massique (Ev$_i$) du fluide (22),
   - un taux de perte (dv$_i$) de matière (7, 36) s'écoulant à travers la fuite (30a,b) étant déterminé dans le cas d'une fuite (30a, b) à l'aide du premier débit massique (Av$_i$) et du second débit massique (Ev$_i$).

2. Procédé selon la revendication 1, dans lequel le fluide (22) est analysé au niveau de deux produits (7, 36) différents, associés à chaque fois à une fuite (30a, b) sur la conduite interne (6) et sur la conduite externe (8).

3. Procédé selon l'une quelconque des revendications précédentes, dans lequel, dans le cas d'une fuite (30a, b), on détecte à l'aide du premier débit massique (Av$_i$) et du second débit massique (Ev$_i$) si la fuite (30a, b) se trouve sur la conduite interne (6) ou sur la conduite externe (8).

4. Procédé selon l'une quelconque des revendications précédentes, dans lequel :

   - le fluide (22) est déplacé depuis la première extrémité (16a) en direction de la seconde extrémité (16b) après la détection d'une fuite (30a, b),
   - le fluide (22) est étudié au niveau d'un produit (7, 36) caractéristique d'une fuite (30a, b) sur la seconde extrémité (16b),
   - un emplacement (L$_{1,2}$) de fuite (30a, b) est déterminé à l'aide du temps de transport (Tx) du produit (7, 36) caractéristique depuis la fuite (30a, b) en direction de la seconde extrémité (16b) et à l'aide du débit massique (Ev$_i$, Av$_i$) du fluide (22).

5. Dispositif (4) pour détecter une fuite (30a, b) sur une conduite double (2), la conduite double (2) présentant une conduite interne (6) et une conduite externe (8) englobant cette conduite interne avec un espace intermédiaire (10), comprenant :

   - un dispositif de transport (8, 36) pour déplacer un fluide (22) à travers l'espace intermédiaire (10) depuis une seconde extrémité (16b) de la conduite double en direction d'une première extrémité (16a),
   - un capteur de produit (28a, b) disposé sur la première extrémité (16a) pour l'examen du fluide (22) au niveau d'un produit (7, 36) caractéristique d'une fuite (30a, b),
   - un capteur de débit massique (24a, b) sur la première extrémité (16a) et la seconde extrémité (16b) pour le fluide (22) circulant à travers l'espace intermédiaire (10),
   - une unité de commande et d'analyse (32) pour générer un signal de fuite (34) en cas de détection du produit (7, 36) et pour déterminer l'emplacement (L$_{1, 2}$) de la fuite (30a, b) à l'aide du temps de transport (Tx) du produit (7, 36) caractéristique depuis la fuite (30a, b) jusqu'au capteur (28a, b) et à l'aide des capteurs de débit massique (24a, b).

6. Dispositif (4) selon la revendication 5, comprenant une étanchéité (40) respective pour l'espace intermédiaire (10) avec une sortie (42) sur la première extrémité (16a) et une entrée (44) sur la seconde extrémité (16b) de la conduite double (2), le capteur de produit (28a, b) et le capteur de débit massique (24a, b) étant montés en aval de la sortie (42).

7. Dispositif (4) selon la revendication 5 ou 6, sur lequel l'entrée (44) et la sortie (42) présentent une section qui correspond au moins approximativement à la section libre de l'espace intermédiaire (10) dans la direction d'extension de la conduite double (2).

8. Dispositif (4) selon l'une quelconque des revendications 5 à 7, comprenant un capteur de produit (28a, b) divers pour respectivement pour des produits (7, 36) caractéristiques en corrélation respectivement avec une fuite (30a, b) sur la conduite interne (6) et sur la conduite externe (8).

9. Dispositif (4) selon l'une quelconque des revendications 5 à 8, comprenant un autre capteur de produit (28b) sur l'entrée (44).

Fig. 4

Fig. 1

Fig. 2

EP 2 174 109 B1

Fig.3

a)

b)

c)

EP 2 174 109 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2431907 A1
- DE 10060976 B4
- DE 19525176 A1
- DE 69409011 T2